# EUROPEAN PATENT APPLICATION

(11) **EP 2 447 617 A1**
(43) Date of publication of application: **02.05.2012**
(21) Application number: 10834192.6
(22) Date of filing: 14.09.2010
(51) Int. Cl.: F24H 1/18, F24H 1/20

(54) **MAGNETIC ENERGY WATER HEATER**

(30) Priority: 01.12.2009 CN 200910194269
(71) Applicant: Kukel Technology Company Limited, Hong Kong (CN)
(72) Inventor: ZHONG, Binglin, Guangdong 510000 (CN)
(74) Representative: Rosenquist, Per Olof
(86) International application number: PCT/CN2010/076901
(87) International publication number: WO 2011/066759

(57) **Abstract**

The present invention discloses a magnetic water heater including a watercourse main body and a water flow switch. The watercourse main body includes a water tank, a water inlet, and a water outlet. The water inlet, water tank and water outlet are sequentially connected with each another by pipelines. The water flow switch is arranged between the water inlet and the water tank. A plurality of magnetic heating fins is arranged in the water tank. The magnetic heating fins and the water flow switch are connected to a control circuit. The magnetic water heater can not only improve the water purifying rate, but also increase the solvency of water, and inhibit growth and breeding of bacillus, thereby dramatically improving the water quality.

## Description

### TECHNICAL FIELD

The present invention relates to a water heater with a heat generator, and more particularly, to a magnetic water heater.

### BACKGROUND

Currently, a conventional magnetic water heater generally arranges a permanent magnet in water outlets of a water tap or in the water tap, and purifies the water by the means that the water instantaneously flows through the magnet when opens a water gate. For example, there is a Chinese patent which title is magnetization water heater (patent number is 93228245.8), the patent discloses a magnetization water heater which has a technical solution that a water chamber is internally assembled with a cold water pipe, the cold water pipe is provided with an injection mixing section, the injection mixing section is connected with a water heater suction pipe, and an inner portion of a shell is assembled with a permanent magnet. Although the conventional magnetic water heater can purify the water to a certain degree, however, the purifying rate is low.

There is, therefore, a need for a magnetic water heater, which improves the water quality.

### SUMMARY

Aiming at the above defects, the solved technical problem of the present patent application aims at providing a magnetic water heater which can not only improve the water purifying rate, but also increase the solvency of water, and inhibit growth and breeding of bacillus, thereby remarkably improving the water quality.

In order to solve the above technical problem, the present patent application provides the magnetic water heater which comprises a watercourse main body and a water flow switch, wherein the watercourse main body comprises a water tank, a water inlet and two water outlets. The water inlet, the water tank and the water outlets are sequentially connected with each another by pipelines. The water flow switch is arranged between the water inlet and the water tank. A plurality of magnetic heating fins is arranged in the water tank; and the magnetic heating fins and the water flow switch are coupled to a control circuit.

Preferably, an amount of the magnetic heating fins arranged in the water tank is more than two.

Preferably, the magnetic heating fins are made from ceramic silicon nitride material, aluminium nitride material or titanium nitride material.

Preferably, the watercourse main body is provided with a water gate for controlling water flow.

Preferably, the watercourse main body is made of copper.

Preferably, the control circuit is provided with a leakage protection switch.

Preferably, the control circuit is provided with a temperature controller.

Preferably, the water outlets are provided with a reversing valve.

Compared with the prior arts, the magnetic water heater has a water tank. An inside of the water tank is provided with the magnetic heating fins, and the magnetic heating fins and the water flow switch are coupled to the control circuit. The water inlet of the magnetic water heater is connected to a tap water pipe, and when the tap water enters into the water tank through the water flow switch, simultaneously, the water flow switch controls the control circuit which is coupled with the magnetic heating fins to be electrified, and the magnetic heating fins generate the magnetic field and are rapidly heated up, so as to heat up the tap water and simultaneously magnetize the tap water, purify the water, improve liquidity of the water, solvency of the water, penetrability of the water, adsorbability of the water, and inhibit growth and breeding of bacillus, thereby remarkably improving the water quality.

Furthermore, the control circuit of the magnetic water heater is further provided with the leakage protection switch and the temperature controller, thereby solving the problems of electricity leakage and unstable water temperature when in use, and being capable of ensuring the use security of the water tap.

Other objects, advantages and novel features of the present invention will become more apparent from the following detailed description when taken in conjunction with the accompanying drawings, in which:

### BRIEF DESCRIPTION OF THE DRAWINGS

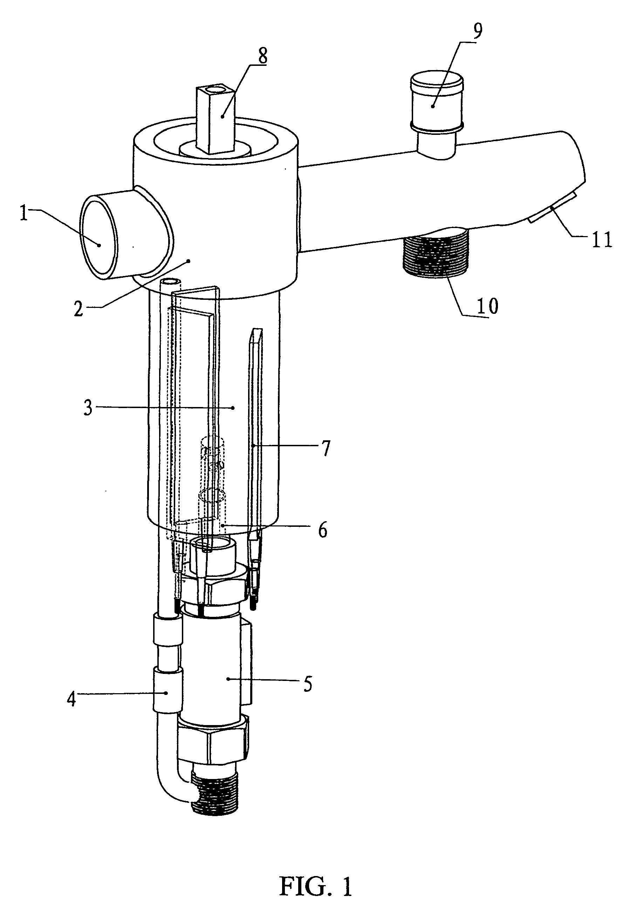

FIG. 1 is a structural and schematic view of a magnetic water heater in accordance with an embodiment of the present invention.

### DETAILED DESCRIPTION OF THE PREFERRED EMBODIMENTS

Objects, advantages and embodiments of the present invention will be explained below in detail with reference to the accompanying drawing. However, it is to be appreciated that the following description of the embodiment(s) is merely exemplary in nature and is no way intended to limit the invention, its application, or uses.

Referring to FIG. 1, a magnetic water heater is shown in accordance with an embodiment of the present invention. The magnetic water heater includes a watercourse main body 2 and a water flow switch 5. The watercourse main body 2 includes a water tank 3, a water inlet 1 and two water outlets 10, 11. The water inlet 1, the water tank 3 and the water outlets 10, 11 are sequentially connected with each another by a pipeline 4. The water flow switch 5 is arranged between the water inlet 1 and the water tank 3. Three magnetic heating fins 7 are arranged in the water tank 3, and the magnetic heating fins 7 and the water flow switch 5 are coupled to a control circuit. The amount of the magnetic heating fins in the magnetic water heater can be determined as required, and the embodiment of the present patent application takes three magnetic heating fins as an example.

The magnetic heating fins 7 may be made from ceramic silicon nitride material, aluminium nitride material or titanium nitride material. In the present embodiment, the magnetic heating fins 7 are made from the ceramic silicon nitride material. The ceramic silicon nitride material, the aluminium nitride material and the titanium nitride material have good water and electricity isolation performance, thereby being capable of preventing metal pipes in the traditional water heater from self-oxidizing, aging, electricity leaking, etc.

The water flow switch 5 is arranged between the water inlet 1 and the water tank 3, so that the water flow can be controlled, and so that the water flow switch 5 controls the control circuit which is connected with the magnetic heating fins 7 to be electrified only when the water flow switch 5 is open and after the water enters into the water tank 3. Thus, the magnetic heating fins 7 starts to generate the magnetic field and be rapidly heated after the water tank 3 is filled with water and the use security is ensured.

The watercourse main body 2 is provided with a water gate 8 for controlling water discharge to be capable of adjusting the quantity of the water discharge. The watercourse main body 2 is made of copper, which is less affected by the change of the outer temperature and has low expansion and contraction coefficients and good heat resistance and weather resistance, thereby being capable of ensuring the stability performance of the watercourse main body 2.

The water outlets are provided with a reversing valve 9 which can adjust the hot water to flow out from the water outlet 10 or the water outlet 11.

The present patent application is in capsule design, isolates the water from the electricity, and has high security coefficient. The control circuit is further provided with a leakage protection switch and a temperature controller, thereby solving the problems of electric leakage and unstable water temperature when in use and being capable of guaranteeing security of using taps (faucets).

Taking the magnetic heating fins 7 made from ceramic silicon nitride as an example, the magnetic water heater has the working principle as follows:

The magnetic water heater is provided with a water tank inlet pipe 6 which is connected to a central position in the water tank 3. The diameter of the water tank inlet pipe 6 is less than that of the water inlet 1 of the water tap. After the water flows through the water flow switch 5, the magnetic heating fins 7 are electrified to generate high temperature and magnetic field, and when the water flows through the magnetic field with high temperature and intensity, the magnetic heating fins 7 can heat up the water, and the generated magnetic field can break water molecular chain. The magnetic water heater magnetizes the water by means of the micro magnetic field formed by the magnetic heating fins 7 being electrified to work, therefore, the discharged water has magnetism to be capable of enhancing solvency, penetrability, adsorbability, and the like, and maintaining microelement and mineral substance required by human body, and the water quality changes to be soft, so that the human skin can change to be more smooth and tender if bathing with the softened and magnetized water for a long time, thereby achieving the effects of health protection, skin protection and skin beauty.

The present invention may be embodied in other forms without departing from the spirit or novel characteristics thereof. The embodiment disclosed in this application is to be considered in all respects as illustrative and not limitative. The scope of the invention is indicated by the appended claims rather than by the foregoing description; and all changes which come within the meaning and range of equivalency of the claims are intended to be embraced therein.

## Claims

1. A magnetic water heater, comprising:
a watercourse main body comprising a water tank, a water inlet and two water outlets; and
a water flow switch, wherein the water inlet, the water tank and the water outlets are sequentially connected with each another by pipelines, the water flow switch is arranged between the water inlet and the water tank, a plurality of magnetic heating fins are arranged in the water tank; and the magnetic heating fins and the water flow switch are coupled to a control circuit.

2. The magnetic water heater as claimed in claim 1, wherein an amount of the magnetic heating fins arranged in the water tank is more than two.

3. The magnetic water heater as claimed in claim 1, wherein the magnetic heating fins are made from ceramic silicon nitride material.

4. The magnetic water heater as claimed in claim 1, wherein the magnetic heating fins are made from aluminium nitride material.

5. The magnetic water heater as claimed in claim 1, wherein the magnetic heating fins are made from titanium nitride material.

6. The magnetic water heater as claimed in claim 1, wherein the watercourse main body is provided with a water gate for controlling water flow.

7. The magnetic water heater as claimed in claim 1, wherein the watercourse main body is made of copper.

8. The magnetic water heater as claimed in claim 1, wherein the control circuit is provided with a leakage protection switch.

9. The magnetic water heater as claimed in claim 1, wherein the control circuit is provided with a temperature controller.

10. The magnetic water heater as claimed in claim 1, wherein the water outlets are provided with a reversing valve.
